(19) Europäisches Patentamt / European Patent Office / Office européen des brevets

(11) EP 3 162 432 A1

(12) EUROPEAN PATENT APPLICATION
published in accordance with Art. 153(4) EPC

(43) Date of publication:
**03.05.2017 Bulletin 2017/18**

(21) Application number: **15815706.5**

(22) Date of filing: **30.06.2015**

(51) Int Cl.:
***B01D 71/56*** (2006.01) ***B01D 69/00*** (2006.01)
***B01D 69/10*** (2006.01) ***B01D 69/12*** (2006.01)
***C08J 9/36*** (2006.01)

(86) International application number:
**PCT/JP2015/068919**

(87) International publication number:
**WO 2016/002819 (07.01.2016 Gazette 2016/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.06.2014 JP 2014133716**

(71) Applicant: **Toray Industries, Inc.**
**Tokyo 103-8666 (JP)**

(72) Inventors:
- **SHIMURA Harutoki**
  **Otsu-shi**
  **Shiga 520-8558 (JP)**
- **OGAWA Takafumi**
  **Otsu-shi**
  **Shiga 520-8558 (JP)**
- **FURUNO Shuji**
  **Otsu-shi**
  **Shiga 520-8558 (JP)**
- **TAKAYA Kiyohiko**
  **Otsu-shi**
  **Shiga 520-8558 (JP)**
- **SASAKI Takao**
  **Otsu-shi**
  **Shiga 520-8558 (JP)**
- **KIMURA Masahiro**
  **Otsu-shi**
  **Shiga 520-8558 (JP)**

(74) Representative: **Hoefer & Partner Patentanwälte mbB**
**Pilgersheimer Straße 20**
**81543 München (DE)**

# (54) COMPOSITE SEMIPERMEABLE MEMBRANE

(57) An object of the present invention is to provide a composite semipermeable membrane which has practical water permeability and high alkali resistance. The composite semipermeable membrane of the present invention includes: a supporting membrane including a substrate and a porous supporting layer; and a separation functional layer disposed on the porous supporting layer of the supporting membrane, in which the separation functional layer includes a crosslinked fully aromatic polyamide, and when a carboxyl group/amide group molar ratio of the separation functional layer is expressed by x, x is 0.54 or less.

EP 3 162 432 A1

## Description

TECHNICAL FIELD

The present invention relates to a composite semipermeable membrane useful for selective separation of a liquid mixture. The composite semipermeable membrane obtained by the present invention can be suitably used for desalination of brackish water or seawater.

BACKGROUND ART

Membrane separation methods are spreading as methods for removing substances (e.g., salts) dissolved in a solvent (e.g., water) from the solvent. Membrane separation methods are attracting attention as energy-saving and resource-saving methods.

Examples of the membranes for use in the membrane separation methods include microfiltration membranes, ultrafiltration membranes, nanofiltration membranes, and reverse osmosis membranes. These membranes are used for producing potable water, for example, from seawater, brackish water, or water containing a harmful substance, and for producing industrial ultrapure water, wastewater treatment, recovery of valuables, etc. (see, for example, Patent Documents 1 and 2).

Most of the reverse osmosis membranes and nanofiltration membranes that are commercially available at present are composite semipermeable membranes. There are two types of composite semipermeable membranes: one which includes a gel layer and an active layer obtained by crosslinking a polymer, the layers being disposed on a porous supporting layer; and one which includes a porous supporting layer and an active layer formed by condensation-polymerizing monomers on the porous supporting layer. Among composite semipermeable membranes of the latter type, a composite semipermeable membrane having a separation functional layer including a crosslinked polyamide obtained by the polycondensation reaction of a polyfunctional amine with a polyfunctional acid halide is in extensive use as a separation membrane having high permeability and selectively separating properties.

From the standpoint of attaining a cost reduction in various water treatments in water production plants, etc. by improving the operation stability, simplifying the operation, and prolonging the membrane life, those composite semipermeable membranes are required to have durability in various kinds of chemical cleaning for removing contaminations adhered to the membrane surfaces. One of these is cleaning with an alkali. The current polyamide-based composite semipermeable membranes have some degree of durability concerning resistance to fluctuations in liquid nature. However, from the standpoint of filtrating raw water which varies in quality, a composite semipermeable membrane which can retain high separation performance and a practical level of water permeability even when subjected to severer alkali cleaning, is desired.

BACKGROUND ART DOCUMENT

PATENT DOCUMENT

Patent Document 1: JP-A-55-147106
Patent Document 2: JP-A-5-76740

SUMMARY OF THE INVENTION

PROBLEMS THAT THE INVENTION IS TO SOLVE

Conventional composite semipermeable membranes have a problem in that in cases when the raw water has poor quality to cause severe membrane fouling and when cleaning with a chemical, in particular, cleaning with an alkali, is frequently repeated, there are cases where the boron-removing properties decrease.

An object of the present invention is to provide a composite semipermeable membrane which combines high boron-removing performance and practical water permeation rate even under such conditions that cleaning with an alkali is frequently conducted.

MEANS FOR SOLVING THE PROBLEMS

In order to achieve the above-mentioned object, the present invention has the following configurations (1) to (4).

(1) A composite semipermeable membrane including: a supporting membrane including a substrate and a porous supporting layer; and a separation functional layer disposed on the porous supporting layer of the supporting membrane,
in which the separation functional layer includes a crosslinked fully aromatic polyamide as a main component, and when a carboxyl group/amide group molar ratio of the separation functional layer is expressed by x, x is 0.54 or less.
(2) The composite semipermeable membrane according to (1), in which, when an amino group/amide group molar ratio of the separation functional layer is expressed by y, x+y is 0.80 or less.
(3) The composite semipermeable membrane according to (1) or (2), in which, when the separation functional layer is hydrolyzed with an alkali to obtain carboxylic acid salts and when the number of moles of an isophthalic acid and salt thereof, the number of moles of a terephthalic acid and salt thereof, and the number of moles of a trimesic acid and salt thereof, among the carboxylic acid salts, are expressed by a, b and c, respectively, $(a+b)/c<0.1$.
(4) The composite semipermeable membrane according to any one of (1) to (3), in which the separation functional layer is formed by the following steps (a) to (c):

(a) a step of bringing an aqueous solution containing a polyfunctional aromatic amine into contact with a surface of the porous supporting layer;
(b) a step of bringing an organic-solvent solution containing a polyfunctional aromatic acid halide into contact with the porous supporting layer with which the aqueous solution containing the polyfunctional aromatic amine has been brought into contact; and
(c) a step of heating the porous supporting layer with which the organic-solvent solution containing the polyfunctional aromatic halide has been brought into contact, and
in which an amount of water remaining in the composite semipermeable membrane after the step (c) is regulated to 30-95% of an amount of the water remaining after the step (b).

ADVANTAGE OF THE INVENTION

According to the present invention, it is possible to provide a composite semipermeable membrane which has practical water permeability and high alkali resistance.

MODE FOR CARRYING OUT THE INVENTION

1. Composite Semipermeable Membrane

The composite semipermeable membrane according to the present invention includes: a supporting membrane including a substrate and a porous supporting layer; and a separation functional layer disposed on the porous supporting layer of the supporting membrane. The separation functional layer is a layer which substantially has separating performance, while the supporting membrane has substantially no separating performance concerning separation of ions and the like and can impart strength to the separation functional layer.

(1-1) Substrate

Examples of the substrate include polyester-based polymers, polyamide-based polymers, polyolefin-based polymers, and mixtures or copolymers thereof. Especially preferred of these is fabric of a polyester-based polymer which is highly stable mechanically and thermally. With respect to the form of fabric, use can be advantageously made of long-fiber nonwoven fabric, short-fiber nonwoven fabric, or woven or knit fabric. The term "long-fiber nonwoven fabric" means nonwoven fabric having an average fiber length of 300 mm or longer and an average fiber diameter of 3-30 $\mu$m.
It is preferable that the substrate has an air permeability of 0.5-5.0 cc/cm$^2$/sec. In cases when the air permeability of the substrate is within that range, a polymer solution for forming the porous supporting layer is impregnated into the substrate and, hence, adhesion to the substrate improves and the physical stability of the supporting membrane can be heightened.
The thickness of the substrate is preferably in the range of 10-200 $\mu$m, more preferably in the range of 30-120 $\mu$m.
In this description, thickness is expressed in terms of average value unless otherwise indicated. The term "average value" herein means arithmetic average value. The thickness of the substrate and that of the porous supporting layer are each determined through an examination of a cross-section thereof by calculating an average value of the thicknesses of 20 points measured at intervals of 20 $\mu$m along a direction (plane direction of the membrane) perpendicular to the thickness direction.

(1-2) Porous Supporting Layer

The porous supporting layer in the present invention has substantially no separating performance concerning separation of ions and the like, and serves to impart strength to the separation functional layer which substantially has separating performance. The porous supporting layer is formed on the substrate. The porous supporting layer is not particularly limited in size and distribution of pores. However, preferred is a porous supporting layer which, for example, has even and fine pores or has fine pores that gradually increase in size from the surface thereof on the side where the separation functional layer is to be formed to the surface thereof on the other side and in which the size of the fine pores as measured on the surface on the side where the separation functional layer is to be formed is 0.1-100 nm. However, there are no particular limitations on the materials to be used and the shapes thereof.

Usable as materials for the porous supporting layer are, for example, homopolymers or copolymers such as polysulfones, polyethersulfones, polyamides, polyesters, cellulosic polymers, vinyl polymers, poly(phenylene sulfide), poly(phenylene sulfide sulfone)s, poly(phenylene sulfone), and poly(phenylene oxide). These polymers can be used alone or as a blend thereof. Usable as the cellulosic polymers are cellulose acetate, cellulose nitrate, and the like. Usable as the vinyl polymers are polyethylene, polypropylene, poly(vinyl chloride), polyacrylonitrile, and the like. Preferred of these are homopolymers or copolymers such as polysulfones, polyamides, polyesters, cellulose acetate, cellulose nitrate, poly(vinyl chloride), polyacrylonitrile, poly(phenylene sulfide), and poly(phenylene sulfide sulfone)s. More preferred examples include cellulose acetate, polysulfones, poly(phenylene sulfide sulfone)s, and poly(phenylene sulfone). Of these materials, polysulfones can be generally used since this material is highly stable chemically, mechanically, and thermally and is easy to mold.

Specifically, a polysulfone made up of repeating units represented by the following chemical formula is preferred because use of this polysulfone renders pore-diameter control of the porous supporting layer easy and this layer has high dimensional stability. In the chemical formula, n is a positive integer.

[Chem. 1]

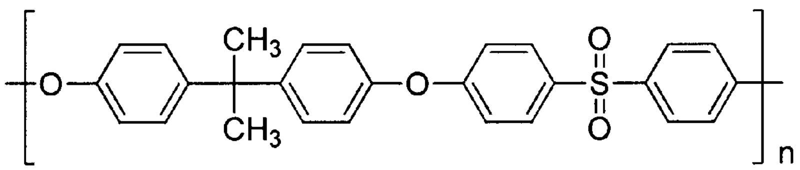

The polysulfone, when examined by gel permeation chromatography (GPC) using N-methylpyrrolidone as a solvent and using polystyrene as a reference, has a weight-average molecular weight (Mw) of preferably 10,000-200,000, more preferably 15,000-100,000. In cases when the Mw thereof is 10,000 or higher, the polysulfone as a porous supporting layer can have preferred mechanical strength and heat resistance. Meanwhile, in cases when the Mw thereof is 200,000 or less, the solution has a viscosity within an appropriate range and satisfactory formability is rendered possible.

For example, an N,N-dimethylformamide (hereinafter referred to as DMF) solution of the polysulfone is cast in a certain thickness on densely woven polyester fabric or nonwoven fabric, and the solution cast is coagulated by a wet process in water. Thus, a porous supporting layer can be obtained in which most of the surface has fine pores with a diameter of several tens of nanometers or less.

The thicknesses of the substrate and porous supporting layer affect the strength of the composite semipermeable membrane and the packing density in an element fabricated using the composite semipermeable membrane. From the standpoint of obtaining sufficient mechanical strength and sufficient packing density, the total thickness of the substrate and the porous supporting layer is preferably 30-300 μm, more preferably 100-220 μm. It is preferable that the thickness of the porous supporting layer is 20-100 μm.

(1-3) Separation Functional Layer

In the present invention, the separation functional layer includes a crosslinked fully aromatic polyamide. It is especially preferable that the separation functional layer includes a crosslinked fully aromatic polyamide as a main component. The term "main component" means a component which accounts for at least 50% by weight of the components of the separation functional layer. In cases when the separation functional layer includes a crosslinked fully aromatic polyamide in an amount of 50% by weight or more, high removal performance can be exhibited. It is preferable that the separation functional layer is constituted substantially of a crosslinked fully aromatic polyamide only. Namely, it is preferable that at least 90% by weight of the separation functional layer is accounted for by a crosslinked fully aromatic polyamide.

The crosslinked fully aromatic polyamide can be formed by interfacial polycondensation of one or more polyfunctional aromatic amines with one or more polyfunctional aromatic acid halides. It is preferable that at least one of the polyfunctional aromatic amines and the polyfunctional aromatic acid halides includes a compound having a functionality of 3 or higher.

The separation functional layer in the present invention is hereinafter sometimes referred to as "polyamide separation functional layer".

The term "polyfunctional aromatic amine" means an aromatic amine that has, in the molecule thereof, two or more amino groups which each are a primary amino group or a secondary amino group and in which at least one is a primary amino group. Examples of the polyfunctional aromatic amine include polyfunctional aromatic amines in each of which two amino groups have been bonded to the aromatic ring in the ortho, meta, or para positions, such as o-phenylenediamine, m-phenylenediamine, p-phenylenediamine, o-xylylenediamine, m-xylylenediamine, p-xylylenediamine, o-diaminopyridine, m-diaminopyridine, and p-diaminopyridine and polyfunctional aromatic amines such as 1,3,5-triaminobenzene, 1,2,4-triaminobenzene, 3,5-diaminobenzoic acid, 3-aminobenzylamine, and 4-aminobenzylamine. In particular, m-phenylenediamine, p-phenylenediamine, and 1,3,5-triaminobenzene are suitable for use when the selectively separating properties, permeability, and heat resistance of the membrane are taken into account. Of these, more preferred is to use m-phenylenediamine (hereinafter referred to also as m-PDA) from the standpoints of availability and handleability. Those polyfunctional aromatic amines may be used alone or in combination of two or more thereof.

The term "polyfunctional aromatic acid halide" means an aromatic acid halide which has at least two halogenocarbonyl groups in the molecule thereof. Examples of trifunctional acid halides include trimesoyl chloride, and examples of bifunctional acid halides include biphenyldicarbonyl dichloride, azobenzenedicarbonyl dichloride, terephthaloyl chloride, isophthaloyl chloride, and naphthalenedicarbonyl chloride. When the reactivity with the polyfunctional aromatic amines is taken into account, it is preferable that the polyfunctional aromatic acid halide is polyfunctional aromatic acid chlorides. When the selectively separating properties and heat resistance of the membrane are taken into account, it is more preferable that the polyfunctional aromatic acid halide is polyfunctional aromatic acid chlorides which each have two to four chlorocarbonyl groups in the molecule thereof.

Use of a bifunctional acid halide is more effective in reducing the content of terminal carboxyl groups in the polyamide functional layer than use of an acid halide having a functionality of 3 or higher. Meanwhile, from the standpoints of forming a three-dimensional crosslinked structure and ensuring water permeability by improving hydrophilicity, it is more preferred to use a trifunctional acid halide. Especially preferred is to use trimesoyl chloride, from the standpoints of availability and handleability.

Those polyfunctional aromatic acid halides may be used alone or in combination of two or more thereof. For the reasons shown above, it is preferable that the molar ratio of bifunctional acid halides, such as terephthaloyl chloride and isophthaloyl chloride, to trifunctional acid halides, such as trimesoyl chloride, is 0-0.1. Namely, when the number of moles of isophthalic acid and a salt thereof, the number of moles of terephthalic acid and a salt thereof, and the number of moles of trimesic acid and a salt thereof are expressed by a, b and c, respectively, it is preferable that $0 \leq (a+b)/c \leq 0.1$. This molar ratio can be determined by hydrolyzing the separation functional layer with an alkali to obtain carboxylic acid salts and calculating the molar ratio from the weights of the carboxylic acid salts.

Present in the polyamide separation functional layer are amide groups derived from the polymerization of the polyfunctional aromatic amine(s) with the polyfunctional aromatic acid halide(s) and amino and carboxyl groups derived from unreacted functional groups. The present inventors diligently made investigations and, as a result, have found that the molar ratio between the carboxyl groups and the amide groups correlates with the alkali resistance. In case where a polyamide having carboxyl groups at the ends thereof is treated under alkaline conditions, there are cases where the carboxyl groups are ionized. The degree of this ionization is determined by the alkalinity of the liquid and the base dissociation constant of carboxyl group. In case where the carboxyl groups are ionized, the higher-order structure of the membrane is disordered by Coulomb force, resulting in a larger decrease in rejection. For avoiding this problem, it is important that when the carboxyl group/amide group molar ratio is expressed by x, the value of x is regulated to 0.54 or less. The value of x is preferably 0.4 or less, more preferably 0.35 or less. From the standpoint of imparting hydrophilicity to the polyamide separation functional layer, it is preferable that x is 0.1 or larger.

The present inventors have further found that the molar ratio between the sum of carboxyl groups and amino groups and the amount of amide groups also correlates with the alkali resistance. In case where a polyamide is treated under strongly alkaline conditions, there are cases where the molecular chains are cut due to hydrolysis of the amide groups, resulting in a decrease in rejection. However, the polyamide functional layer in which the proportion of carboxyl and amino groups that are terminal functional groups is low and the proportion of amide groups is high has a high molecular weight and has been highly crosslinked. Consequently, this polyamide functional layer is less apt to change in structure even under alkaline conditions and hence suffers only a small decrease in rejection. In cases when the carboxyl group/amide group molar ratio is expressed by x and the amino group/amide group molar ratio is expressed

by y and then x+y is 0.80 or less, the composite semipermeable membrane can retain a boron removal ratio that renders the composite semipermeable membrane practically usable, even after having been treated under strongly alkaline conditions. It is preferable that x+y is 0.1 or larger, from the standpoint of imparting hydrophilicity to the polyamide separation functional layer.

The molar ratios between carboxyl groups, amino groups, and amide groups can be determined by examining the separation functional layer by $^{13}C$ solid NMR spectroscopy. Specifically, the substrate is removed from a 5-$m^2$ portion of the composite semipermeable membrane to obtain the polyamide separation functional layer and the porous supporting layer, and the porous supporting layer is thereafter dissolved away to obtain the polyamide separation functional layer. The polyamide separation functional layer obtained is examined by DD/MAS-$^{13}C$ solid NMR spectroscopy. The ratios can be calculated from comparisons between the integrals of peaks attributable to carbon atoms of the functional groups or of peaks attributable to carbon atoms to which the functional groups have been bonded.

It is preferable from the standpoint of attaining the chemical structure described above that the proportions of carbon, nitrogen, and oxygen elements in the crosslinked fully aromatic polyamide are such that the content of carbon is 64.0-67.0% by weight, that of nitrogen is 10.5-14.5% by weight, and that of oxygen is 15.0-21.0% by weight.

Although amide groups derived from the polymerization of one or more polyfunctional aromatic amines with one or more polyfunctional aromatic acid halides and amino and carboxyl groups derived from unreacted functional groups are present in the polyamide separation functional layer as described above, there also are other functional groups which were possessed by the polyfunctional aromatic amine(s) or polyfunctional aromatic acid halide(s). Furthermore, by performing a chemical treatment, functional groups can be introduced into the polyamide separation functional layer and the performance of the composite semipermeable membrane can be improved. Examples of new functional groups include alkyl groups, alkenyl groups, alkynyl groups, halogeno radicals, hydroxyl group, ether group, thioether group, ester groups, aldehyde group, nitro group, nitroso group, nitrile group, and azo group. For example, chlorine radicals can be introduced by a treatment with an aqueous sodium hypochlorite solution. Halogeno radicals can be introduced also by the Sandmeyer reaction via diazonium salt formation. Furthermore, azo groups can be introduced by an azo coupling reaction via diazonium salt formation, and phenolic hydroxyl groups can be introduced by hydrolyzing a diazonium salt.

2. Process for Producing the Composite Semipermeable Membrane

Next, a process for producing the composite semipermeable membrane is explained. The composite semipermeable membrane includes a step in which a porous supporting layer is formed on at least one surface of a substrate and a step in which a separation functional layer is formed on the porous supporting layer.

(2-1) Formation of Porous Supporting Layer

As the substrate and the porous supporting layer, appropriate membranes can be selected from among various commercial membranes such as "Millipore Filter VSWP" (trade name), manufactured by Millipore Corp., and "Ultrafilter UK10" (trade name), manufactured by Toyo Roshi Ltd.

It is also possible to produce the porous supporting layer by the method described in Office of Saline Water Research and Development Progress Report, No. 359 (1968). Furthermore, methods known as methods for forming a porous supporting layer are suitable for use.

(2-2) Process for Producing the Separation Functional Layer

Next, steps for forming the separation functional layer which constitutes the composite semipermeable membrane are explained. The steps for forming the separation functional layer include the following steps (a) to (c):

(a) a step of bringing an aqueous solution containing a polyfunctional aromatic amine into contact with a surface of the porous supporting layer;
(b) a step of bringing an organic-solvent solution containing a polyfunctional aromatic acid halide into contact with the porous supporting layer with which the aqueous solution containing the polyfunctional aromatic amine has been brought into contact; and
(c) a step of heating the porous supporting layer with which the organic-solvent solution containing the polyfunctional aromatic halide has been brought into contact.

In step (a), the concentration of the polyfunctional aromatic amine in the aqueous polyfunctional-aromatic-amine solution is preferably in the range of 0.1-20% by weight, more preferably in the range of 0.5-15% by weight. In cases when the concentration of the polyfunctional aromatic amine is within this range, sufficient solute-removing performance and water permeability can be obtained.

The aqueous polyfunctional-aromatic-amine solution may contain a surfactant, organic solvent, alkaline compound, antioxidant, and the like so long as these ingredients do not inhibit the reaction between the polyfunctional aromatic amine and the polyfunctional aromatic acid halide. Surfactants have the effects of improving the wettability of the surface of the supporting membrane and reducing interfacial tension between the aqueous polyfunctional-aromatic-amine solution and nonpolar solvents. There are cases where organic solvents act as a catalyst in interfacial polycondensation reactions, and there are cases where addition of an organic solvent enables the interfacial polycondensation reaction to be efficiently carried out.

Polyfunctional aromatic amines are prone to be oxidized and deteriorate. Consequently, by purifying again the polyfunctional aromatic amine just before an aqueous solution thereof is produced, the yield in the reaction in step (b) is improved and, as a result, a membrane having high alkali resistance can be obtained. For the purification, use can be made of techniques such as recrystallization and sublimation purification. The purity of the polyfunctional aromatic amine is preferably 99% or higher, more preferably 99.9% or higher.

It is preferable that the aqueous polyfunctional-aromatic-amine solution is continuously brought into even contact with a surface of the porous supporting layer. Specific examples of methods therefor include: a method in which the aqueous polyfunctional-aromatic-amine solution is applied by coating to the porous supporting layer; and a method in which the porous supporting layer is immersed in the aqueous polyfunctional-aromatic-amine solution. The period during which the porous supporting layer is in contact with the aqueous polyfunctional-amine solution is preferably 1 second to 10 minutes, more preferably 10 seconds to 3 minutes.

After the aqueous polyfunctional-amine solution is brought into contact with the porous supporting layer, the excess solution is sufficiently removed so that no droplets remain on the membrane. By sufficiently removing the excess solution, any portions where droplets remain can be prevented from becoming membrane defects in the resulting porous supporting layer, thereby reducing the removal performance. As a method for removing the excess solution, use can be made, for example, of a method in which the supporting membrane which has been contacted with the aqueous polyfunctional-amine solution is held vertically to make the excess aqueous solution to flow down naturally and a method in which streams of a gas, e.g., nitrogen, are blown against the supporting membrane from air nozzles to forcedly remove the excess solution, as described in JP-A-2-78428. After the removal of the excess solution, the membrane surface may be dried to remove some of the water contained in the aqueous solution.

In step (b), the concentration of the polyfunctional acid halide in the organic-solvent solution is preferably in the range of 0.01-10% by weight, more preferably in the range of 0.02-2.0% by weight. This is because a sufficient reaction rate can be obtained by regulating the concentration thereof to 0.01% by weight or higher and the occurrence of side reactions can be inhibited by regulating the concentration thereof to 10% by weight or less. Furthermore, incorporation of an acylation catalyst into this organic-solvent solution is more preferred because the interfacial polycondensation is accelerated thereby.

It is desirable that the organic solvent is one which is water-immiscible and does not damage the supporting membrane and in which the polyfunctional acid halide dissolves. The organic solvent may be any such organic solvent which is inert to the polyfunctional amine compound and the polyfunctional acid halide. Preferred examples thereof include hydrocarbon compounds such as n-hexane, n-octane, n-decane, and isooctane.

For bringing the organic-solvent solution of the polyfunctional aromatic acid halide into contact with the porous supporting layer which has been contacted with the aqueous solution of the polyfunctional aromatic amine compound, use can be made of the same method as that for coating the porous supporting layer with the aqueous solution of the polyfunctional aromatic amine.

In step (c), the porous supporting layer with which the organic-solvent solution of the polyfunctional aromatic acid halide has been contacted is heated. The temperature at which the porous supporting layer is heat-treated may be 50-180°C, preferably 60-160°C. The amount of water remaining in the composite semipermeable membrane after step (c) must be 30-95% of the amount of the water remaining after step (b). It is preferable that the amount of the water remaining in the composite semipermeable membrane after step (c) is 60-90% of the amount of the water remaining after step (b). In cases when the heat treatment temperature in step (c) is 50°C or higher and the amount of water remaining immediately after the heat treatment (i.e., after step (c)) is not larger than 95% of the water amount measured before the heat treatment (i.e., after step (b)), the interfacial polymerization reaction can be accelerated by heat and by an increase in the concentration of the aqueous amine solution and, hence, the amount of carboxyl groups which remain can be reduced. Meanwhile, by regulating the amount of water remaining immediately after the heat treatment to 30% or more of the water amount measured before the heat treatment, the polyamide functional layer and the porous supporting layer can be prevented from being excessively dried and practical water permeability can be ensured.

Methods for the heating are not particularly limited, and use can be made of hot air, infrared rays, microwaves, hot rolls, or the like. It is, however, necessary to conduct the heating while regulating the amount of remaining water so as to be within the preferred range. In the case where a general drying device, oven, hot rolls, or the like is used, it is not easy to evenly regulate the amount of water remaining in the composite semipermeable membrane to a value within

that range by merely setting the conditions including temperature, wind velocity, period, etc. Portions where the porous supporting layer is excessively dried or portions where water remains but the heating is too insufficient to accelerate the interfacial polymerization can result over the whole membrane or locally. Methods for regulating the amount of remaining water are not particularly limited. However, use can be made, for example, of a method in which the rate of water vaporization from the front and back surfaces of the membrane is controlled, or atmosphere control can be used in which water or water vapor is properly added to the membrane.

3. Utilization of the Composite Semipermeable Membrane

The composite semipermeable membrane of the present invention is suitable for use as a spiral type composite semipermeable membrane element produced by winding the composite semipermeable membrane around a cylindrical collecting pipe having a large number of perforations, together with a feed-water channel member such as a plastic net and a permeate channel member such as tricot and optionally with a film for enhancing pressure resistance. Furthermore, such elements can be connected serially or in parallel and housed in a pressure vessel, thereby configuring a composite semipermeable membrane module.

Moreover, the composite semipermeable membrane or the element or module thereof can be combined with a pump for supplying feed water thereto, a device for pretreating the feed water, etc., thereby configuring a fluid separator. By using this separator, feed water can be separated into a permeate such as potable water and a concentrate which has not passed through the membrane. Thus, water suited for a purpose can be obtained.

Examples of the feed water to be treated with the composite semipermeable membrane according to the present invention include liquid mixtures having a TDS (total dissolved solids) of 500 mg/L to 100 g/L, such as seawater, brackish water, and wastewater. In general, TDS means the total content of dissolved solids, and is expressed in terms of "weight/volume" or "weight ratio". According to a definition, the content can be calculated from the weight of a residue obtained by evaporating, at a temperature of 39.5-40.5°C, a solution filtered through a 0.45-μm filter. However, a simpler method is to convert from practical salinity (S).

Higher operation pressures for the fluid separator are effective in improving the solute rejection. However, in view of the resultant increase in the amount of energy necessary for the operation and in view of the durability of the composite semipermeable membrane, the operation pressure at the time when water to be treated is passed through the composite semipermeable membrane is preferably 0.5-10 MPa. With respect to the temperature of the feed water, the solute rejection decreases as the temperature thereof rises. However, as the temperature thereof declines, the membrane permeation flux decreases. Consequently, the temperature thereof is preferably 5-45°C. Meanwhile, too high pH values of the feed water result in a possibility that, in the case of feed water having a high solute concentration, such as seawater, scale of magnesium or the like might occur. There also is a possibility that the membrane might deteriorate due to the high-pH operation. Consequently, it is preferable that the separator is operated in a neutral range.

EXAMPLES

The present invention will be explained below in more detail by reference to Examples, but the present invention should not be construed as being limited by the following Examples.

In the Examples and Comparative Examples, analyses for functional groups and composition and determination of the amounts of remaining water were conducted in the following manners. Hereinafter, the operations were performed at 25°C unless otherwise indicated.

(Quantitative Determination of Carboxyl, Amino, and Amide Groups)

The substrate was physically peeled from a 5-$m^2$ portion of a composite semipermeable membrane to recover the porous supporting layer and the separation functional layer. The recovered layers were allowed to stand for 24 hours to thereby dry the layers, and were then introduced little by little into a beaker containing dichloromethane. The contents were stirred to dissolve the polymer constituting the porous supporting layer. The insoluble in the beaker was recovered with a filter paper. This insoluble was introduced into a beaker containing dichloromethane, the contents were stirred, and the insoluble in the beaker was recovered again. This operation was repeated until the dissolution of any component of the polymer constituting the porous supporting layer into the dichloromethane solution came not to be detected. The separation functional layer recovered was dried in a vacuum dryer to remove the residual dichloromethane. The separation functional layer obtained was freeze-pulverized to obtain a powdery sample. This sample was put into a sample tube for solid NMR spectroscopy, and the sample tube was closed. The sample was subjected to $^{13}C$ solid NMR spectroscopy by the CP/MAS method and DD/MAS method. For the $^{13}C$ solid NMR spectroscopy, use can be made, for example, of CMX-300, manufactured by Chemagnetics Inc. Examples of the measuring conditions are shown below.

Reference: polydimethylsiloxane (internal reference: 1.56 ppm)
Sample rotation speed: 10.5 kHz
Pulse repetition time: 100 s

The spectrum obtained was subjected to peak separation to obtain peaks assigned to carbon atoms to which the functional groups had respectively been bonded, and functional group amount ratios were determined from the areas of the peaks obtained.

(Compositional Analysis)

The separation functional layer which had been recovered as described above was immersed in a 40% heavy water solution of sodium deuteroxide, and this container was closed and heated in a pressure vessel at 120°C for 10 hours to completely hydrolyze the separation functional layer. The solution obtained was analyzed by $^1$H NMR spectroscopy to determine the proportions of decomposition products.

(Amounts of Remaining Water)

Immediately after a heat treatment, a 0.5-$m^2$ portion was cut out from the composite semipermeable membrane and the substrate was physically peeled off to recover the porous supporting layer and the separation functional layer. The recovered layers were introduced into a glass vessel to which a calcium chloride tube had been attached, and the vessel was heated at 150°C until the calcium chloride tube came not to change in weight. The difference in the weight of the calcium chloride tube between before and after the heating was taken as the amount of water remaining after the heating.

The composite semipermeable membrane which had not undergone the heating was also examined by cutting out a portion thereof and conducting the same test to determine the amount of water present before the heating.

$$\text{Amount of remaining water (\%)} = [(\text{amount of water after heating})/(\text{amount of water before heating})] \times 100$$

In the case of performing no heating, the amount of water in the composite semipermeable membrane which had been allowed to stand as such for 30 seconds was determined and the amount of remaining water was measured in the same manner.

Various properties of each composite semipermeable membrane were determined by feeding seawater regulated so as to have a pH of 6.5 (TDS concentration, 3.5%; boron concentration, about 5 ppm) to the composite semipermeable membrane at an operation pressure of 5.5 MPa to conduct a membrane filtration treatment for 24 hours and examining the permeate obtained thereafter and the feed water for quality.

(Membrane Permeation Flux)

The rate of permeation of feed water (seawater) through the membrane was expressed in terms of water permeation rate ($m^3$) per membrane area of $m^2$ per day and this rate was taken as the membrane permeation flux ($m^3/m^2$/day).

(Boron Removal Ratio)

The feed water and the permeate were analyzed for boron concentration with an ICP emission spectrometer (P-4010, manufactured by Hitachi Ltd.), and the boron removal ratio was determined using the following equation.

$$\text{Boron removal ratio (\%)} = 100 \times \{1-(\text{boron concentrate in permeate})/(\text{boron concentration in feed water})\}$$

(Alkali Resistance Test)

The composite semipermeable membrane was immersed for 20 hours in an aqueous sodium hydroxide solution

having a pH adjusted to 13. Thereafter, the composite semipermeable membrane was sufficiently cleaned with water and evaluated for boron removal ratio, thereby determining the alkali resistance.

(Production of Supporting Membrane)

A 16.0% by weight DMF solution of a polysulfone (PSf) was cast in a thickness of 200 μm on nonwoven polyester fabric (air permeability, 2.0 cc/cm$^2$/sec), and this nonwoven fabric was immediately immersed in pure water and allowed to stand therein for 5 minutes, thereby producing a supporting membrane.

(Example 1)

m-Phenylenediamine was purified by sublimation to a purity of 99.95%, and a 6.0% by weight aqueous solution thereof was produced immediately. The supporting membrane obtained by the operation described above was immersed in the aqueous solution for 2 minutes and then slowly pulled up vertically. Nitrogen was blown thereagainst from an air nozzle to remove the excess aqueous solution from the surfaces of the supporting membrane. Thereafter, in a booth kept at 45°C, a 45°C decane solution containing 0.165% by weight trimesoyl chloride (TMC) was applied to a surface of the membrane so that the membrane surface was completely wetted, and this membrane was allowed to stand for 10 seconds. The coated membrane was introduced into a 120°C oven and heated for 30 seconds while supplying 100°C water vapor from a nozzle disposed on the back surface side of the membrane, thereby obtaining a composite semipermeable membrane. In Table 1 are shown the amount of remaining water in the composite semipermeable membrane obtained, terminal functional groups thereof, proportions of carboxylic acid salts after hydrolysis, and membrane performances before and after the alkali resistance test.

(Example 2)

A composite semipermeable membrane of Example 2 was obtained in the same manner as in Example 1, except that the trimesoyl chloride solution was replaced with a decane solution containing 0.006% by weight isophthaloyl chloride and 0.157% by weight trimesoyl chloride.

(Example 3)

A composite semipermeable membrane of Example 3 was obtained in the same manner as in Example 1, except that the trimesoyl chloride solution was replaced with a decane solution containing 0.006% by weight isophthaloyl chloride, 0.006% by weight terephthaloyl chloride, and 0.149% by weight trimesoyl chloride.

(Example 4)

A composite semipermeable membrane of Example 4 was obtained in the same manner as in Example 1, except that the trimesoyl chloride solution was replaced with a decane solution containing 0.013% by weight isophthaloyl chloride, 0.013% by weight terephthaloyl chloride, and 0.132% by weight trimesoyl chloride.

(Example 5)

A composite semipermeable membrane of Example 5 was obtained in the same manner as in Example 1, except that m-phenylenediamine was purified by recrystallization to 99.9% and a 6.0% by weight solution thereof produced immediately thereafter was used.

(Example 6)

A composite semipermeable membrane of Example 6 was obtained in the same manner as in Example 1, except that m-phenylenediamine was used without being purified.

(Example 7)

A composite semipermeable membrane of Example 7 was obtained in the same manner as in Example 6, except that air heated to 100°C and humidified to a humidity of 80% was supplied from the back surface side of the membrane.

(Example 8)

A composite semipermeable membrane of Example 8 was obtained in the same manner as in Example 6, except that air heated to 100°C and humidified to a humidity of 50% was supplied from the back surface side of the membrane.

(Example 9)

A composite semipermeable membrane of Example 9 was obtained in the same manner as in Example 6, except that 100°C water vapor was supplied from the back surface side of the membrane and the heating period was changed to 5 seconds.

(Example 10)

The composite semipermeable membrane obtained in Example 1 was immersed in a 500 ppm aqueous solution of m-PDA for 120 seconds and then immersed for 1 minute in a 0.4% by weight aqueous sodium nitrite solution having a pH adjusted to 3.0 and having a temperature of 35°C. The pH adjustment of the aqueous sodium nitrite solution was made with sulfuric acid. Thereafter, the composite semipermeable membrane was immersed in a 35°C 0.1% by weight aqueous sodium sulfite solution for 2 minutes to obtain a composite semipermeable membrane of Example 10.

(Comparative Example 1)

A composite semipermeable membrane of Comparative Example 1 was obtained in the same manner as in Example 1, except that the step of introducing the membrane into an oven was omitted.

(Comparative Example 2)

A composite semipermeable membrane of Comparative Example 2 was obtained in the same manner as in Example 5, except that the step of introducing the membrane into an oven was omitted.

(Comparative Example 3)

A composite semipermeable membrane of Comparative Example 3 was obtained in the same manner as in Example 6, except that heating in the 120°C oven was conducted for 15 seconds without supplying water vapor from the nozzle disposed on the back surface side of the membrane.

(Comparative Example 4)

A composite semipermeable membrane of Comparative Example 4 was obtained in the same manner as in Example 6, except that heating in the 120°C oven was conducted for 180 seconds without supplying water vapor from the nozzle disposed on the back surface side of the membrane.

(Comparative Example 5)

A composite semipermeable membrane of Comparative Example 5 was obtained in the same manner as in Example 6, except that the trimesoyl chloride solution was replaced with IP Solvent 1016 (manufactured by Idemitsu Kosan Co., Ltd.) and that heating in the 120°C oven was conducted for 180 seconds without supplying water vapor from the nozzle disposed on the back surface side of the membrane.

(Comparative Example 6)

A composite semipermeable membrane of Comparative Example 6 was obtained in the same manner as in Example 6, except that the trimesoyl chloride solution was replaced with Isoper L (manufactured by Exxon Mobil Corp.), that the reaction was conducted for 60 seconds in a booth kept at 25°C, and that the step of introducing the membrane into an oven was omitted.

(Comparative Example 7)

A composite semipermeable membrane of Comparative Example 7 was obtained in the same manner as in Comparative Example 2, except that the concentration of the m-phenylenediamine solution was changed to 10%.

In Table 1 are shown the results of evaluation of the composite semipermeable membranes obtained above, concerning the amount of remaining water, terminal functional groups, proportions of carboxylic acid salts after hydrolysis, and membrane performances before and after the alkali resistance test.

Table 1

| | Purity of amine | Amount of remaining water | Solid NMR | | Hydrolyzate NMR | | | Membrane performance | | | |
|---|---|---|---|---|---|---|---|---|---|---|---|
| | | | Carboxyl group/ amide group molar ratio | Amino group/ amide group molar ratio | Molar ratio of isophthalic acid | Molar ratio of terephthalic acid | Molar ratio of trimesic acid | Before alkali resistance test | | After alkali resistance test | |
| | (%) | (%) | x | y | a | b | c | Membrane permeation flux ($m^3/m^2/day$) | Boron Removal ratio (%) | Boron Removal ratio (%) | Decrease in boron Removal ratio through test (%) |
| Ex. 1 | 99.95 | 75 | 0.30 | 0.30 | 0 | 0 | 1 | 0.80 | 92.0 | 91.0 | 1.0 |
| Ex. 2 | 99.95 | 79 | 0.28 | 0.45 | 0.05 | 0 | 0.95 | 0.78 | 91.3 | 89.0 | 2.3 |
| Ex. 3 | 99.95 | 80 | 0.27 | 0.45 | 0.05 | 0.05 | 0.9 | 0.73 | 91.4 | 89.4 | 1.9 |
| Ex. 4 | 99.95 | 80 | 0.25 | 0.45 | 0.1 | 0.1 | 0.8 | 0.62 | 91.5 | 90.2 | 1.3 |
| Ex. 5 | 99.9 | 75 | 0.43 | 0.37 | 0 | 0 | 1 | 0.85 | 90.9 | 84.6 | 6.3 |
| Ex. 6 | 99.9 | 72 | 0.41 | 0.35 | 0 | 0 | 1 | 0.84 | 91.2 | 85.8 | 5.4 |
| Ex. 7 | 98 | 62 | 0.48 | 0.37 | 0 | 0 | 1 | 0.86 | 90.7 | 82.8 | 7.9 |
| Ex. 8 | 98 | 40 | 0.49 | 0.41 | 0 | 0 | 1 | 0.88 | 90.4 | 81.5 | 8.9 |
| Ex. 9 | 98 | 91 | 0.54 | 0.40 | 0 | 0 | 1 | 0.89 | 90.2 | 80.3 | 9.9 |
| Ex. 10 | 99.95 | 75 | 0.29 | 0.31 | 0 | 0 | 1 | 0.95 | 95.0 | 93.2 | 1.8 |
| Comp. Ex. 1 | 99.95 | 100 | 0.58 | 0.45 | 0 | 0 | 1 | 0.91 | 89.7 | 77.3 | 12.5 |
| Comp. Ex. 2 | 99.9 | 99 | 0.61 | 0.47 | 0 | 0 | 1 | 0.92 | 89.5 | 75.7 | 13.7 |
| Comp. Ex. 3 | 98 | 96 | 0.57 | 0.39 | 0 | 0 | 1 | 0.84 | 90.1 | 78.8 | 11.3 |
| Comp. Ex. 4 | 98 | 18 | 0.55 | 0.35 | 0 | 0 | 1 | 0.30 | 92.0 | 81.9 | 10.1 |
| Comp. Ex. 5 | 98 | 20 | 0.58 | 0.42 | 0 | 0 | 1 | 0.50 | 89.0 | 76.9 | 12.1 |

(continued)

| | Purity of amine | Amount of remaining water | Solid NMR | | Hydrolyzate NMR | | | Membrane performance | | | |
|---|---|---|---|---|---|---|---|---|---|---|---|
| | | | Carboxyl group/ amide group molar ratio | Amino group/ amide group molar ratio | Molar ratio of isophthalic acid | Molar ratio of terephthalic acid | Molar ratio of trimesic acid | Before alkali resistance test | | After alkali resistance test | |
| | (%) | (%) | x | y | a | b | c | Membrane permeation flux ($m^3/m^2/day$) | Boron Removal ratio (%) | Boron Removal ratio (%) | Decrease in boron Removal ratio through test (%) |
| Comp. Ex. 6 | 98 | 100 | 0.55 | 0.28 | 0 | 0 | 1 | 0.90 | 90.0 | 79.8 | 10.2 |
| Comp. Ex. 7 | 99.9 | 100 | 0.56 | 0.65 | 0 | 0 | 1 | 0.65 | 88.8 | 74.4 | 14.4 |

As demonstrated by Examples 1 to 10, it can be seen that the composite semipermeable membranes of the present invention have high alkali resistance and practical high water permeability.

While the invention has been described in detail and with reference to specific embodiments thereof, it will be apparent to one skilled in the art that various changes and modifications can be made therein without departing from the spirit and scope thereof. This application is based on a Japanese patent application filed on June 30, 2014 (Application No. 2014-133716), the contents thereof being incorporated herein by reference.

INDUSTRIAL APPLICABILITY

The composite semipermeable membrane of the present invention is suitable for the desalination of seawater or brackish water.

## Claims

1. A composite semipermeable membrane comprising: a supporting membrane comprising a substrate and a porous supporting layer; and a separation functional layer disposed on the porous supporting layer of the supporting membrane,
   wherein the separation functional layer comprises a crosslinked fully aromatic polyamide, and when a carboxyl group/amide group molar ratio of the separation functional layer is expressed by x, x is 0.54 or less.

2. The composite semipermeable membrane according to claim 1, wherein, when an amino group/amide group molar ratio of the separation functional layer is expressed by y, x+y is 0.80 or less.

3. The composite semipermeable membrane according to claim 1 or 2, wherein, when the separation functional layer is hydrolyzed with an alkali to obtain carboxylic acid salts and when the number of moles of an isophthalic acid and salt thereof, the number of moles of a terephthalic acid and salt thereof, and the number of moles of a trimesic acid and salt thereof, among the carboxylic acid salts, are expressed by a, b and c, respectively, $(a+b)/c \leq 0.1$.

4. The composite semipermeable membrane according to any one of claims 1 to 3, wherein the separation functional layer is formed by the following steps (a) to (c):

   (a) a step of bringing an aqueous solution containing a polyfunctional aromatic amine into contact with a surface of the porous supporting layer;
   (b) a step of bringing an organic-solvent solution containing a polyfunctional aromatic acid halide into contact with the porous supporting layer with which the aqueous solution containing the polyfunctional aromatic amine has been brought into contact; and
   (c) a step of heating the porous supporting layer with which the organic-solvent solution containing the polyfunctional aromatic halide has been brought into contact, and

   wherein an amount of water remaining in the composite semipermeable membrane after the step (c) is regulated to 30-95% of an amount of the water remaining after the step (b).

**INTERNATIONAL SEARCH REPORT**

International application No. PCT/JP2015/068919

A. CLASSIFICATION OF SUBJECT MATTER
*B01D71/56*(2006.01)i, *B01D69/00*(2006.01)i, *B01D69/10*(2006.01)i, *B01D69/12*(2006.01)i, *C08J9/36*(2006.01)i

According to International Patent Classification (IPC) or to both national classification and IPC

B. FIELDS SEARCHED

Minimum documentation searched (classification system followed by classification symbols)
B01D53/22, B01D61/00-71/82, C02F1/44, C08J9/36

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 11-076776 A (Toray Industries, Inc.), 23 March 1999 (23.03.1999), claims; paragraphs [0001] to [0017], [0040] to [0049] (Family: none) | 1-4 |
| X | WO 2014/081232 A1 (LG Chem, Ltd.), 30 May 2014 (30.05.2014), paragraphs [0002] to [0011], [0063] to [0064], [0104] to [0119] & JP 2015-510451 A & US 2014/0319051 A1 & EP 2759333 A1 & KR 10-2014-0065359 A & CN 104053494 A | 1-4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 August 2015 (07.08.15) | 08 September 2015 (08.09.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

INTERNATIONAL SEARCH REPORT

International application No. PCT/JP2015/068919

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-226358 A (Toray Industries, Inc.), 08 October 2009 (08.10.2009), paragraphs [0001] to [0008], [0021] to [0036] (Family: none) | 1-4 |
| A | JP 2009-226320 A (Toray Industries, Inc.), 08 October 2009 (08.10.2009), paragraphs [0001] to [0007], [0022] to [0039] (Family: none) | 1-4 |
| A | JP 11-347385 A (Toray Industries, Inc.), 21 December 1999 (21.12.1999), entire text (Family: none) | 1-4 |
| A | WO 2012/090862 A1 (Toray Industries, Inc.), 05 July 2012 (05.07.2012), entire text & CN 103260733 A & US 2013/0256215 A1 & EP 2659956 A1 & KR 10-2014-0005885 A | 1-4 |
| A | JP 2002-336666 A (Nitto Denko Corp.), 26 November 2002 (26.11.2002), entire text (Family: none) | 1-4 |
| A | JP 2008-080187 A (Toray Industries, Inc.), 10 April 2008 (10.04.2008), entire text (Family: none) | 1-4 |
| A | JP 2004-209406 A (Nitto Denko Corp.), 29 July 2004 (29.07.2004), entire text (Family: none) | 1-4 |
| A | JP 01-180208 A (Toray Industries, Inc.), 18 July 1989 (18.07.1989), entire text & US 5051178 A & WO 1989/006153 A1 & EP 357781 A1 | 1-4 |
| A | JP 2000-202257 A (Toray Industries, Inc.), 25 July 2000 (25.07.2000), entire text (Family: none) | 1-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 55147106 A
- JP 5076740 A
- JP 2078428 A
- JP 2014133716 A


### Non-patent literature cited in the description


- *Office of Saline Water Research and Development Progress Report,* 1968